# EUROPÄISCHE PATENTANMELDUNG

(11) **EP 1 298 411 A2**
(43) Veröffentlichungstag der Anmeldung: **02.04.2003**
(21) Anmeldenummer: 02021456.5
(22) Anmeldetag: 25.09.2002
(51) Int. Cl.: G01B 11/25, A61C 13/00, A61C 19/04, B23Q 1/54, F16M 11/12

(54) **Vorrichtung zur Vermessung von dentalen Objekten**

(30) Priorität: 27.09.2001 DE 20115933 U
(71) Anmelder: KALTENBACH & VOIGT GMBH & CO., 88400 Biberach (DE)
(72) Erfinder: Bodenmiller, Anton, 88299 Leutkirch (DE); Breuckmann, Bernd, Dr., 88709 Meersburg (DE); Stöcker, Michael, Dr., 88709 Meersburg (DE); Münstermann, Peter, Dr., 78462 Konstanz (DE); Runge, Michael, 88699 Frickingen (DE)
(74) Vertreter: Schmidt-Evers, Jürgen, Dipl.-Ing.

(57) **Zusammenfassung**

Bei einer Vorrichtung zur optischen Vermessung von dentalen Objekten (30) unter Anwendung von topometrischen Meßverfahren, mit einer drehbar gelagerten Objektaufnahme (18) zur Halterung des zu vermessenden Objekts (30), einem Projektor (11) zur Projektion von strukturierten Lichtmustern auf das Objekt (30), einer Erfassungseinheit (12) zum Erfassen der auf das Objekt (30) aufprojizierten Lichtstrukturen und einer Auswerteeinheit (20) zum Berechnen der räumlichen Struktur des zu vermessenen Objekts (30), wobei die Objektaufnahme (18) zusätzlich um eine senkrecht zur Drehachse (A) angeordnete Schwenkachse (B) schwenkbar gelagert ist, weist die Objektaufnahme (18) ein Bohrungsmuster (31) zum Befestigen von Haltemitteln (32, 33) für die Halterung des Objekts (30) auf. Die Handhabung der Vorrichtung wird hierdurch vereinfacht.

## Beschreibung

Die vorliegende Erfindung betrifft eine Vorrichtung zur optischen Vermessung von dentalen Objekten unter Anwendung von topometrischen Meßverfahren.

In der Medizintechnik, Zahnmedizin oder Zahntechnik werden in zunehmendem Maß prothetische Teile wie z.B. Zahnkronen mit Hilfe von comuptergestützten Systemen erstellt. Hierzu ist zunächst erforderlich, als Fertigungsbasis einen dreidimensionalen Datensatz von der Patientensituation und der geplanten prothetischen Arbeit in einem binären Format zu erstellen, was dadurch erfolgt, daß die Modellsituation, also beispielsweise ein Gipsstumpf, Modellsegmente oder gar ein komplettes Modell sowie die von dem Zahntechniker in Wachs modulierte prothetische Arbeit vermessen werden.

Bei der Herstellung von sog. Gerüsten wird in einigen Fällen zwischenzeitlich gar nicht mehr in Wachs moduliert, sondern statt dessen das Werkstück mit einem 3D-CAD-System von einem speziell ausgebildeten Zahntechniker konstruiert. Auch hier ist es notwendig, von der Ausgangssituation binäre Daten zu erzeugen, die anschließend in der computergestützten Bearbeitung herangezogen werden können.

Zur dreidimensionalen Vermessung von Objekten werden sowohl mechanisch tastende als auch optisch messende Verfahren bzw. Geräte eingesetzt. Bei den optisch messenden Systemen wird wiederum zwischen scannenden Verfahren, die das zu vermessende Objekt Punkt für Punkt vermessen und Projektionssystemen, die anhand von mehreren Gesamtaufnahmen des Objekts dessen dreidimensionale Struktur ermitteln, unterschieden. Bei den Projektionsverfahren wird das zu vermessende Objekt mit strukturierten Lichtmustern beleuchtet und das aufprojizierte Muster von einem unter einen Winkel zur Beleuchtungsrichtung angeordneten Beobachtungssystem aufgenommen. Gemäß den Triangulationsgesetzen werden dann die aufgenommenen Lichtstrukturen ausgewertet und verarbeitet. Dabei kann das Objekt aus verschiedenen Richtungen beleuchtet bzw. betrachtet werden, wobei dann aus der Gesamtheit der Abbildungen die dreidimensionale Struktur berechnet wird. Darüber hinaus wird das zu vermessende Objekt bei einer bestimmten Anordnung mit mehreren Lichtmustern beleuchtet, die beispielsweise phasenverschoben sind oder unterschiedliche Strukturen aufweisen, wodurch die Genauigkeit der optischen Vermessung deutlich erhöht wird.

Ein Verfahren dieser Art ist aus der Literatur als sog. Phasenshiftverfahren bekannt und wird ausführlich in der US 4,641,972 beschrieben. Eine Weiterentwicklung dieses Verfahrens offenbart die DE 195 43 347 A1. Dabei sind die zur Erzeugung der unterschiedlichen Lichtstrukturen verwendeten Projektionsgitter auf einen gemeinsamen Träger mit einer bereits definierten Phasenbeziehung angeordnet, wobei der Träger phasenrichtig im Projektionsstrahlengang verschoben wird. Aufgrund dieser speziellen Anordnung der Projektionsgitter kann die Struktur des zu vermessenden Objekts mit einer sehr hohen Genauigkeit ermittelt werden.

Ferner ist aus der DE 198 38 238 A1 eine Vorrichtung zur rechnergesteuerten Herstellung von Zahnersatz bekannt, bei der das Modell eines zu vermessenden Oberoder Unterkiefers auf einer keilförmigen Objektaufnahme gelagert ist und während der Vermessung gedreht wird.

Eine besondere Schwierigkeit beim optischen Vermessen von dreidimensionalen Objekten stellen Hinterschneidung bzw. Vorsprünge an der Oberfläche des Objekts dar. Dies kann insofern zu Problemen führen, als eine Vermessung dieser Bereiche nur dann zuverlässig erfolgen kann, wenn die Projektionseinheit und die Aufnahmeeinheit in einem hierfür geeigneten Winkel angeordnet sind. Aus der DE 298 12 907 U ist daher eine Anordnung zum Vermessen von dreidimensionalen Modellen, insbesondere von Kiefermodellen bekannt, bei der das zu vermessende Modell auf einer Objektträgerplatte angeordnet wird, die um 360° gedreht werden kann. Während der Drehung wird das zu vermessende Modell von einer Projektionseinheit mit einem Streifenmuster bestrahlt und das dabei entstehende Bild von einer Kamera aufgenommen. Um auch eine Vermessung von Hinterschneidungen zu ermöglichen, kann die Objektträgerplatte zusätzlich um eine senkrecht zur Drehachse der Objektträgerplatte angeordnete Achse geschwenkt werden. Die Richtung, aus der diese Problembereiche vermessen werden, kann hierdurch in geeigneter Weise eingestellt werden.

Alle bisher bekannten optischen Meßsysteme sind verhältnismäßig aufwendig aufgebaut, mechanisch empfindlich und für einen Zahntechniker nur schwer zu bedienen. Der vorliegenden Erfindung liegt daher die Aufgabe zugrunde, ein optisches 3D-Meßsystem anzugeben, welches von Personen in der Dental- oder Zahnmedizin einfach bedient werden und dentale Einzelteile beliebiger Geometrie vermessen kann.

Die Aufgabe wird durch eine Vorrichtung zur optischen Vermessung von dentalen Objekten gemäß Anspruch 1 gelöst. Diese weist eine drehbar gelagerte Objektaufnahme zur Halterung des zu vermessenden Objekts, einen Projektor zur Projektion von strukturierten Lichtmustern auf das Objekt, eine Erfassungseinheit zum Erfassen der auf das Objekt aufprojizierten Lichtstrukturen und eine Auswerteeinheit zum Berechnen der räumlichen Struktur des zu vermessenden Objekts auf. Die Objektaufnahme ist dabei zusätzlich um eine senkrecht zur Drehachse angeordnete Schwenkachse schwenkbar gelagert, wobei durch die damit realisierte Dreh-/Schwenkanordnung sichergestellt wird, daß auch Hinterschneidungen an dem zu vermessenden Objekt, die beispielsweise dann auftreten, wenn eine Krone unterhalb des Äquators, ein Kronenrand oder ein Inlay in Kastenpräparation erstellt werden soll, zuverlässig vermessen werden können.

Um eine einfache Handhabung zu ermöglichen, weist die Objektaufnahme ein Bohrungsmuster zum Befestigen von Haltemitteln für die sichere Halterung des zu vermessenden Objekts auf. Diese Bohrungsmuster ermöglicht es, verschiedenste Objekte sicher und exakt in der Meßvorrichtung anzuordnen. Die lagerichtige Positionierung kann somit auf einfache Weise auch von Personen aus der Dental- oder Zahnmedizin durchgeführt werden, ohne dass eine Handhabung durch speziell geschulte Techniker erforderlich wäre.

Die Dreh-/Schwenkanordnung der Objektaufnahme eröffnet ferner die Möglichkeit, die Bewegungen des zu vermessenden Objekts während des Meßvorganges frei zu programmieren oder der Struktur des Objekts entsprechend vorprogrammierte Bewegungsabläufe zu verwenden, die von dem Benutzer auf einfache Weise aufgerufen werden können. Hierdurch wird die Handhabung des Meßvorrichtung erheblich vereinfacht.

Weiterbildungen der Erfindung sind Gegenstand der Unteransprüche.

So kann die Handhabung weiter verbessert werden, wenn die Objektaufnahme von der Dreh-/Schwenkeinheit abnehmbar ist, so daß sie außerhalb des Meßraumes an einem beliebigen Arbeitsplatz mit dem zu vermessenden Objekt bestückt werden kann. Die vorzugsweise tellerförmig ausgebildete Objektaufnahme weist dabei vorzugsweise ein wabenförmiges Bohrungsmuster auf, welches eine größtmögliche Freiheit bei der Positionierung des Objekts ermöglicht.

Die von einer Bedienperson durchzuführenden Handlungen können ferner auch dadurch vereinfacht werden, daß der Projektor zum Erzeugen des Projektionsmusters und die Erfassungseinheit, bei der er sich beispielsweise um eine CCD-Kamera handelt, auf einem gemeinsamen Stativ angeordnet und fest zueinander ausgerichtet sind. Die Anordnung des Projektors und der Erfassungseinheit ist somit von vorneherein festgelegt und muß nicht durch die Bedienperson jeweils neu eingestellt werden.

Im folgenden soll die Erfindung anhand der beiliegenden Zeichnung näher erläutert werden. Es zeigen:
- Fig. 1: eine Außenansicht der erfindungsgemäßen Vorrichtung bei geschlossener Fronttüre;
- Fig. 2: die Außenansicht der Vermessungsvorrichtung bei abgenommener Fronttüre;
- Fig. 3: die Innenansicht des Meßraumes;
- Fig. 4: eine schematische Darstellung des Meßsystems;
- Fig. 5: das Basiselement der Meßvorrichtung;
- Fig. 6: die Objektaufnahme im abgenommenen Zustand; und
- Fig. 7: eine bestückte Objektaufnahme.

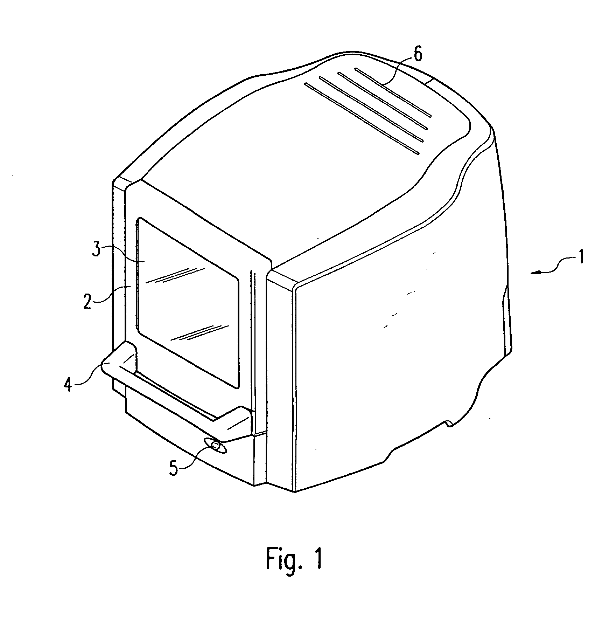

Die erfindungsgemäße optische Vermessungsvorrichtung ist innerhalb eines in Fig. 1 dargestellten kastenförmigen Gehäuses 1 angeordnet, das an seiner Vorderseite mit einer nach oben wegschwenkbaren Tür 2 verschlossen ist. Die mit einem Griff 4 zu betätigende Tür weist ein eine grau mattierte Plexiglasscheibe aufweisendes Sichtfenster 3 auf, über das der Meßvorgang beobachtet werden kann. Unterhalb der Tür 2 ist an der Frontseite des Gehäuses 1 eine LED 5 angeordnet, welche den aktuellen Betriebszustand der Vermessungsvorrichtung anzeigt. Eine permanent leuchtende LED signalisiert beispielsweise die Betriebsbereitschaft, während hingegen ein Blinken anzeigt, daß gerade ein Meßvorgang am Laufen ist. Ein Blitzen der LED hingegen signalisiert das Auftreten eines Fehlers.

An der Oberseite des Gehäuses 1 sind im hinteren Bereich mehrere Lüftungsschlitze 6 angeordnet, durch welche die von den innerhalb des Gehäuses 1 angeordneten elektronischen Geräten erwärmte Luft nach außen abgeführt werden kann.

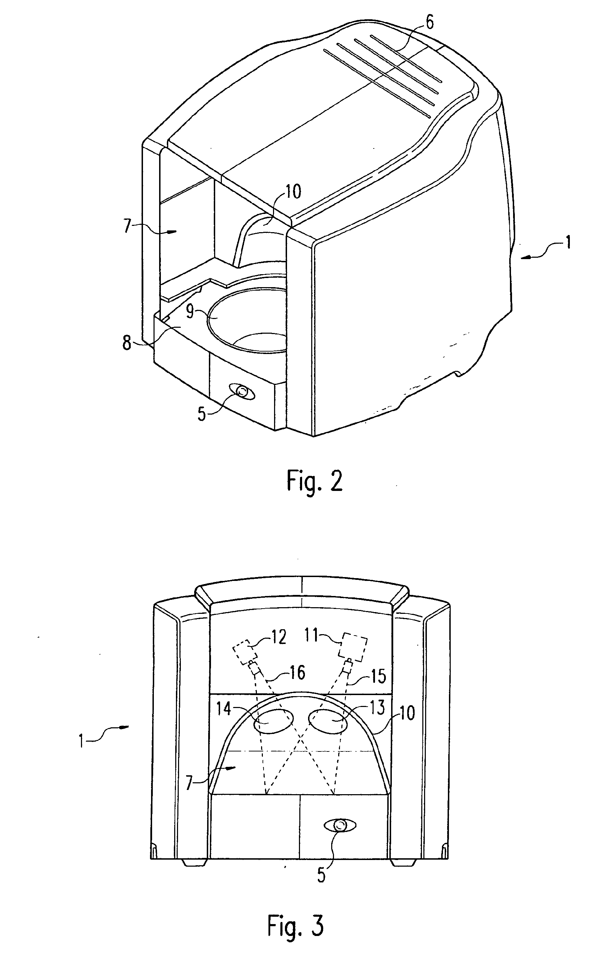

Wie den Darstellungen in den Fig. 2 und 3 zu entnehmen ist, wird durch die (nun nicht dargestellte) Tür Zugang zu dem innerhalb des Gehäuses 1 liegenden Meßraum 7 erhalten, in dem das zu vermessende Objekt angeordnet wird. Die Halterung der weiter unten ausführlicher erläuterten Objektaufnahme erfolgt in einem Basisteil 8, welches im vorderen Bereich eine Ausnehmung 9 in Form einer Halbkugel aufweist, in welche eine die Objektaufnahme haltende Dreh-/Schwenkeinheit eingesetzt wird.

Über eine Schutztrennwand 10, die in ihrem hinteren Bereich kuppelförmig ausgebildet ist, wird der Meßraum 7 von einem hinteren Bereich des Gehäuses 1, in dem u.a. ein Projektor 11 und eine Kamera 12 angeordnet sind, abgetrennt. Ein optischer Kontakt zwischen diesen beiden Geräten und dem zu vermessenden Objekt besteht lediglich über zwei in die Schutztrennwand 10 eingebrachte Öffnungen 13 bzw. 14. Durch die Anordnung des Projektors 11 und der Kamera 12 sowie der beiden Öffnungen 13 und 14 werden ein Beleuchtungskegel 15 und ein Beobachtungskegel 16 definiert, die sich in dem Bereich, in dem das zu vermessende Objekt angeordnet ist, überschneiden. Hierdurch wird eine optimale Vermessung des Objekts bei gleichzeitig größtmöglichen Schutz vor äußeren Einflüssen erreicht.

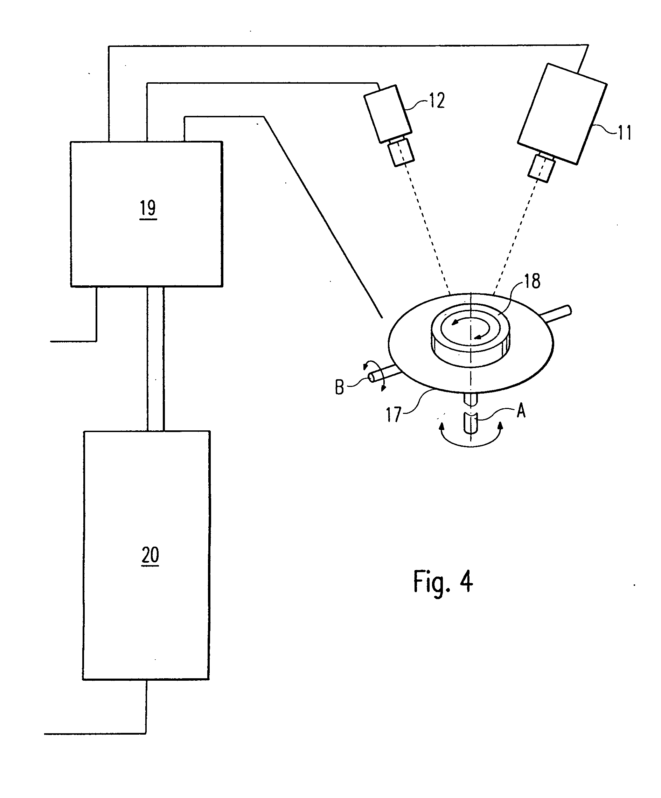

Fig. 4 zeigt den schematischen Aufbau der gesamten Meßvorrichtung. Die wesentlichen Elemente des Vermessungssystems sind die Projektionseinheit 11, die CCD-Kamera 12 sowie die Dreh-/Schwenkeinheit 17, auf der die das zu vermessende Objekt haltende Objektaufnahme 18 gelagert ist. Die Dreh-/Schwenkeinheit 17 ist aus zwei miteinander gekoppelten Drehachsen A und B aufgebaut, wobei der Antrieb der beiden Achsen A und B beim Vermessen des auf der Objektaufnahme 18 angeordneten Objekts über Schrittmotore erfolgt. Diese Anordnung ermöglicht somit das gleichzeitige Drehen und Kippen der Objektaufnahme 18, so daß auch Geometrien mit Hinterschneidungen sicher erfaßt werden können. Um die Verstellmöglichkeiten voll ausnützen zu können, sind die Dreh-/Schwenkeinheit 17 und die Objektaufnahme 18 derart gestaltet, daß der Mittelpunkt des zu vermessenden Objektes in etwa auf der Höhe der Kippachse B liegt.

Die Vermessung des Objekts erfolgt nach dem beispielsweise aus der US 4,641,972 beschriebenen Verfahren. Dabei wird mit Hilfe des Projektors 11 zunächst ein Lichtmuster - beispielsweise ein Streifenmuster - aufprojiziert. Das auf der Oberfläche des Objekts deformierte Lichtmuster wird dann mit Hilfe der Kamera 12 aufgenommen und ausgewertet, wobei aufgrund der bekannten Anordnung des Projektes 11 und der Kamera 12 gegenüber dem zu vermessenden Objekt mit Hilfe von Berechnungen, die im Einzelnen in der US 4,641,972 dargelegt sind, die Koordinaten der Oberfläche des zu vermessenden Objekts berechnet werden können. Solche bildgebenden Triangulationsverfahren sind bereits hinlänglich bekannt und werden daher im folgenden nicht weiter erläutert. Durch ein Verdrehen und Kippen des Objekts werden im vorliegenden Fall Abbildungen aus unterschiedlichen Richtungen aufgenommen, so daß die damit erhaltenen Daten letztendlich zu der dreidimensionalen Gesamtstruktur zusammengesetzt werden können. Analog zu dem in der DE 195 43 347 A1 beschriebenen Verfahren können bei einer gleichbleibenden Anordnung des zu vermessenden Objekts verschiedene Lichtmuster mit definierter Phasenbeziehung nacheinander auf das Objekt aufprojiziert werden. Die Steuerung des Projektors 11, der Kamera 12 und der Dreh-/Schwenkeinheit 17 erfolgt über eine geeignete Steuereinheit 19, welche die von der Kamera 12 erfaßten Bilder an einen Computer 20 eines Bildund Datenverarbeitungssystems weiterleitet.

Wesentliches Merkmal der erfindungsgemäßen Vorrichtung ist, daß der Projektor 11 und die Kamera 12 auf einem gemeinsamen Stativ angeordnet und derart zueinander ausgerichtet sind, daß sich ihre optischen Achsen im Mittelpunkt der Objektaufnahme 18 schneiden. Diese fest vorgegebene Anordnung der verschiedenen Elemente des Vermessungssystems erleichtert zum einen die Handhabung und garantiert zum anderen eine optimale Vermessung des Objekts. Die von der Dreh-/Schwenkeinheit 17 durchgeführten Bewegungen während der Vermessung des Objekts sind frei programmierbar und können vor jeder durchzuführenden Messung neu festgelegt werden. Vorzugsweise werden je nach Art des zu vermessenden Objekts bestimmte voreingestellte Bewegungsabläufe in Form von Macros festgelegt, die dann auf einfache Weise abgerufen werden können. Auch dies trägt dazu bei, die Handhabung des gesamten Systems zu vereinfachen.

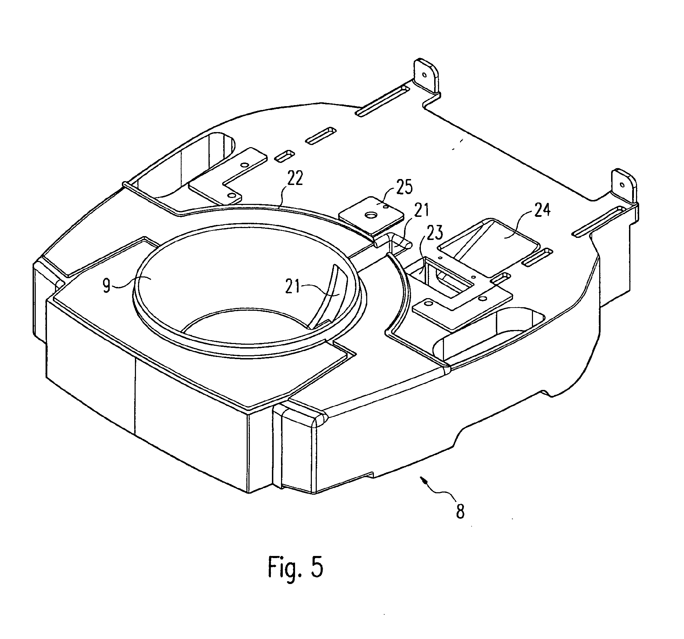

Fig. 5 zeigt das durch ein Alu-Gußteil gebildete Basisteil 8 der Meßvorrichtung mit der halbkugelförmigen Montageausnehmung 9 für die Dreh-/Schwenkeinheit. An der Rückseite des Basisteils 8 befinden sich die (nicht dargestellten) Anschlüsse für die Stromversorgung und der Schnittstelle zum Computer des Bild- und Datenverarbeitungssystems. Auf der Rückseite der Montageausnehmung 9 für die Dreh-/Schwenkeinheit befindet sich ein Kabelschacht 21 für die Steuer- und Stromleitungen der Schrittmotoren der Dreh-/Schwenkeinheit. Eine Rippe 22 an der Oberseite des Basisteils 8 begrenzt den vorderen Meßbereich. Von dieser Rippe 22 erstreckt sich die in Fig. 3 dargestellte Schutztrennwand nach oben, um den Meßraum von dem dahinterliegenden Elektronikbereich abzutrennen.

Zur Kühlung der in dem hinteren Elektronikbereich angeordneten Geräte wird ein nicht dargestellter elektronischer Lüfter verwendet, der in ein Montageloch 23 des Basisteils 8 eingesetzt wird. Von diesem Montageloch 23 erstreckt sich nach hinten ein Verteilerkanal 24, durch den der von dem Lüfter erzeugte Kühlluftstrom so ausgestrahlt wird, daß ein Teil der Kühlluft die Elektronik überstreicht und dabei vor allem den Projektor kühlt. Die restliche Menge der Kühlluft durchströmt den Meßraum. Die erwärmte Luft wird durch die im hinteren Bereich des Gehäuses 1 angeordneten Lüftungsschlitze 6 nach außen abgeführt. Dem Lüfter kann auf der Absaugseite ein Luftfilter vorgeschaltet werden, wodurch verhindert wird, daß Staubpartikel in den Meßraum gelangen.

Auf einer Anlagefläche 25 wird das Stativ montiert, an dessen oberem Ende auf einer geneigten Justagefläche der Streifenlichprojektor 11 und die Kamera 12 angeordnet sind. Die Kamera 12 ist vorzugsweise über eine Firewire-Schnittstelle, die eine hohe Datenübertragungsrate ermöglicht, mit dem optischen Auswertungssystem verbunden.

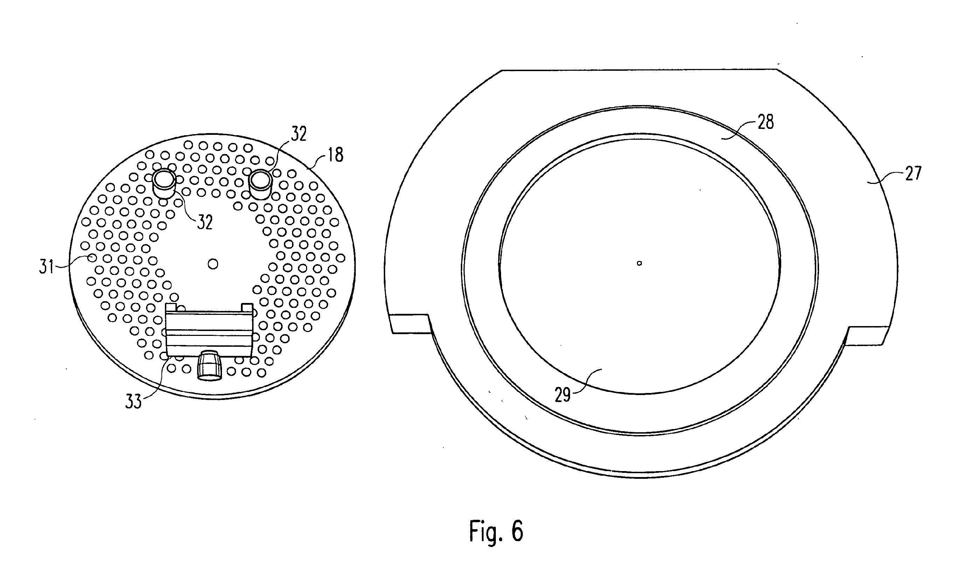

Die Montage der Dreh-/Schwenkeinheit in dem Basisteil 8 erfolgt mit Hilfe eines Auflageringes 27, der in Fig. 6 dargestellt ist. An der Unterseite des Auflageringes 27, der auf den vorderen Bereich des Basisteils 8 aufgelegt wird, befindet sich die Achsenanordnung sowie die Schrittmotore zur Steuerung des Bewegungsablaufs der Objektaufnahme. In der Mitte des Auflagerings 27 ist ein Meßteller 28 angeordnet, der über die Schrittmotore in der oben beschriebenen Weise gedreht und geschwenkt wird.

Der Meßteller 28 weist eine tellerförmige Ausnehmung 29 auf, in welche die Objektaufnahme 18 in Form eines Meßeinsatzes eingelegt werden kann. Die Objektaufnahme 18 ist mit einem wabenförmigen Bohrungsmuster 31 versehen, welches das beliebige Einstecken von Haltestiften 32 und einer Spannvorrichtung 33 zur Befestigung des zu vermessenden Objekts gestattet. Auf diese Weise können zahntechnische Modelle und Objekte beliebiger Form sicher fixiert werden. Insbesondere besteht die Möglichkeit, das Fixieren der zu vermessenden Objekte auf der Objektaufnahme 18 außerhalb des Gehäuses 1 an einem beliebigen Arbeitsplatz oder Raum vorzunehmen.

Die Trennung zwischen dem Meßteller 28 und der Objektaufnahme 18 bietet ferner die Möglichkeit, mehrere Objektaufnahmen 18 zu beladen. Diese können dann zu einem geeigneten Zeitpunkt in die Vermessungsvorrichtung eingesetzt und vermessen werden. Das Bohrungsmuster 31 erlaubt darüber hinaus, spezielle Haltevorrichtungen für das Vermessen von Einzelzähnen oder von Phantomarbeiten einzuschrauben.

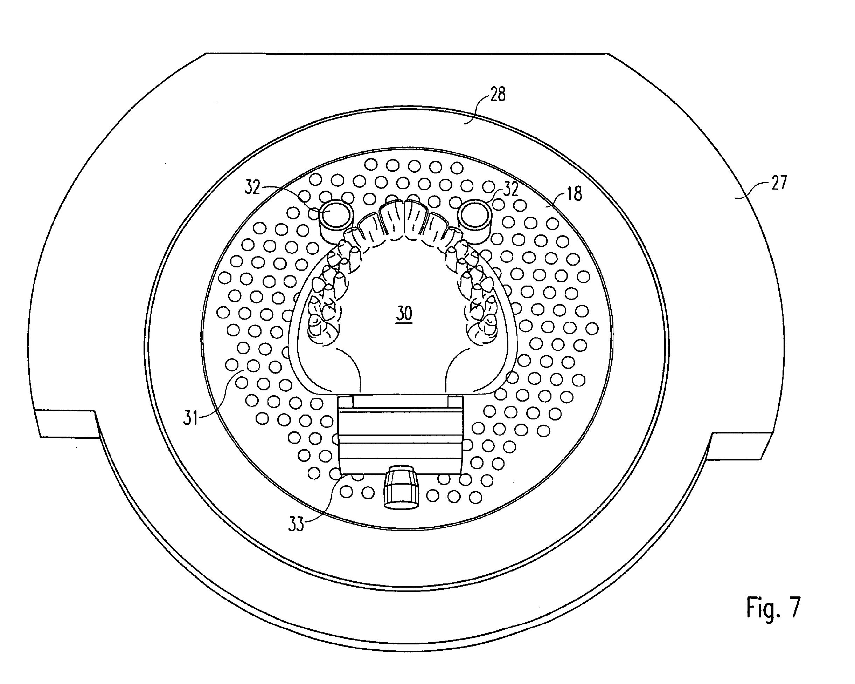

Die mit dem zu vermessenden Objekt 30 bestückte Objektaufnahme 18 wird dann in den Meßteller 28 eingesetzt, so daß sich die in Fig. 7 dargestellte Anordnung ergibt. Durch die abgestimmte Größe der Ausnehmung 29 des Meßtellers 28 ergibt sich eine definierte Auflagefläche für die Objektaufnahme 18, so daß Bedienungsfehler nahezu ausgeschlossen sind. Wie in Fig. 7 dargestellt ist, können durch die freie Anordnung der Haltemittel nahezu beliebige Meßobjekte fixiert und vermessen werden. Dabei ist die Objektaufnahme 18 innerhalb der Dreh-/Schwenkeinheit derart angeordnet, daß das zu vermessende Objekt 30 im wesentlichen auf der Höhe der Schwenkachse gelagert ist. Hierdurch können die Verstellmöglichkeiten der Dreh-/Schwenkeinheit voll ausgenützt werden, so daß eine optimale Vermessung des Objekts 30 ermöglicht wird.

Die erfindungsgemäße Vermessungsvorrichtung ist somit auch für Personen, die in anderen Fachbereichen - wie z.B. der Medizintechnik, Zahnmedizin oder Zahntechnik-tätig sind, einfach bedienbar. Durch die Möglichkeit, die zu vermessenden Objekte zusätzlich zur Drehung zu verschwenken, können auch sehr komplizierte Strukturen zuverlässig und genau vermessen werden.

## Patentansprüche

1. Vorrichtung zur optischen Vermessung von dentalen Objekten (30) unter Anwendung von topometrischen Meßverfahren, mit
einer drehbar gelagerten Objektaufnahme (18) zur Halterung des zu vermessenden Objekts (30),
einem Projektor (11) zur Projektion von strukturierten Lichtmustern auf das Objekt (30),
einer Erfassungseinheit (12) zum Erfassen der auf das Objekt (30) aufprojizierten Lichtstrukturen, und
einer Auswerteeinheit (20) zum Berechnen der räumlichen Struktur des zu vermessenen Objekts (30),
wobei die Objektaufnahme (18) zusätzlich um eine senkrecht zur Drehachse (A) angeordnete Schwenkachse (B) schwenkbar gelagert ist,
**dadurch gekennzeichnet,**
**daß** die Objektaufnahme (18) ein Bohrungsmuster (31) zum Befestigen von Haltemitteln (32, 33) für die Halterung des Objekts (30) aufweist.

2. Vorrichtung nach Anspruch 1,
**dadurch gekennzeichnet,**
**daß** die Objektaufnahme (18) von einer Dreh-/Schwenkeinheit (17) abnehmbar ist.

3. Vorrichtung nach Anspruch 1 oder 2,
**dadurch gekennzeichnet,**
**daß** die Objektaufnahme (18) tellerförmig ist.

4. Vorrichtung nach einem der vorherigen Ansprüche,
**dadurch gekennzeichnet,**
**daß** das Bohrungsmuster (31) wabenförmig ist.

5. Vorrichtung nach einem der vorherigen Ansprüche,
**dadurch gekennzeichnet,**
**daß** das zu vermessende Objekt (30) im wesentlichen auf der Höhe der Schwenkachse (B) gelagert ist.

6. Vorrichtung nach einem der vorherigen Ansprüche,
**dadurch gekennzeichnet,**
**daß** der Projektor (11) und die Erfassungseinheit (12) auf einem gemeinsamen Stativ angeordnet sind.

7. Vorrichtung nach Anspruch 6,
**dadurch gekennzeichnet,**
**daß** der Projektor (11) und die Erfassungseinheit (12) zueinander ausgerichtet sind.

8. Vorrichtung nach einem der vorherigen Ansprüche,
**dadurch gekennzeichnet,**
**daß** die Bewegungsabläufe der Objektaufnahme (18) während des Meßvorganges frei programmierbar sind.

9. Vorrichtung nach einem der vorherigen Ansprüche,
**dadurch gekennzeichnet,**
**daß** über eine Steuereinrichtung (19) vorprogrammierte Bewegungsabläufe für die Objektaufnahme (18) während des Meßvorganges abrufbar sind.
